# EUROPEAN PATENT SPECIFICATION

(11) **EP 1 142 195 B1**
(45) Date of publication and mention of the grant of the patent: **27.07.2005**
(21) Application number: 00900277.5
(22) Date of filing: 13.01.2000
(51) Int. Cl.: H04L 12/14, H04L 29/06, H04M 15/00

(54) **A METHOD OF AND APPARTUS FOR GENERATING DATA FOR CHARGING A USER FOR ACCESS OVER A COMMUNICATIONS NETWORK LINK**
VEFAHREN UND VORRICHTUNG ZUR ERZEUGUNG VON DATEN ZUR VERGEBÜHRUNG EINES ANWENDRS FÜR DEN ZUGANG ÜBER EINE KOMMUNIKATIONSNETZWERKSVERBINDUNG
PROCEDE ET APPAREIL SERVANT A GENERER DES DONNEES PERMETTANT DE DEBITER UN ACCES VIA UNE LIAISON DE RESEAU DE COMMUNICATIONS A UN UTILISATEUR

(30) Priority: 15.01.1999 GB 9900920
(43) Date of publication of application: 10.10.2001
(60) Divisional application: 05076013.1
(73) Proprietor: BRITISH TELECOMMUNICATIONS public limited company, London EC1A 7AJ (GB)
(72) Inventor: HOLMES, Philip, Edward, Paddock Hill, Woodbridge, Suffolk IP13 6PE (GB)
(74) Representative: Roberts, Simon Christopher
(86) International application number: PCT/GB2000/000080
(87) International publication number: WO 2000/042735

(56) References cited:
- EP-A- 0 866 596
- WO-A-98/20646
- US-A- 5 862 335
- RUTH G ET AL: "USAGE-BASED COST RECOVERY IN INTERNETWORKS" BUSINESS COMMUNICATIONS REVIEW, vol. 22, no. 7, 1 July 1992 (1992-07-01), pages 38-42, XP000577637

## Description

### Field of the Invention

This invention relates to a method of and apparatus for generating data for charging a user of a computer system for access over a communications network link. More particularly, but not exclusively, this invention relates to a method of and apparatus for generating data for charging a user of a computer system for access to the content provided by a content provider whether directly or via an access provider.

### Background of the Invention

In the field of the Internet, both the access provider and content provider are sometimes referred to as Internet Service Providers. In this document the term "content provider" refers to an operator of a computer system from which a user of a computer system might want to receive content. The term "access provider" refers to an operator of a computer system which, although it may not contain content useful to the user, enables the user to receive the content from a content provider.

There are a number of technologies with which a user's computer system may be connected to the computer system of an access provider or a content provider over a communications link. One common technology is the "dial-up" modem. The two computer systems at each end of the link are attached to a modem which serves to modulate or demodulate data sent or received so that it may be transmitted over an ordinary Public Switched Telephone Network (PSTN) voice-grade telephone line. This technology, therefore, requires the user to dial up a telephone connection to the access provider or content provider. Another example of a "dial-up" technology is Integrated Services Digital Network (ISDN). This technology uses two ISDN terminal adapters at each end to split an ordinary copper twisted-pair telephone line into two digital channels. It allows greater data transfer rates than ordinary voice-grade modem links, but still requires the user to dial-up a PSTN telephone connection.

Other technologies for physical communications links include permanently-activated communications links, otherwise known as "always-on" communications links. One example of an "always-on" link is a leased line set up by a telecommunications company. Typically, leased lines are set up between geographically distant computer systems for a fixed monthly charge during which the link is, at least potentially, permanently-activated. Another example of communications link technologies which may be set up as "always-on" links are digital subscriber lines, collectively referred to as xDSLs. xDSL communications links offer greater data transfer rates over copper twisted-pair telephone lines than, for example, ISDN communications links. Asymmetric Digital Subscriber Line (ADSL), one of the xDSL family, provides asymmetric data transfer capacities between the two terminal units connected over copper twisted-pair telephone lines or other lines, so that the downstream data transfer rate from the content or access provider may be relatively high compared to the upstream data transfer rate from the user.

There are a number of common methods for charging the user of a computer system connected over a communications network link, for example to the Internet, for the use he makes of the connection. Where the user's computer system is connected to a content or access provider's computer system via a "dial-up" communications link, one method is to charge the user a monthly or yearly subscription fee which entitles him to a certain number of hours "on-line". An other method is to charge the user a monthly or yearly flat-rate fee for unlimited "on-line" time. In both these common methods, the user normally also pays a telephone company for the duration of the telephone call to the content or access provider.

Where the user's computer system is connected to a content or access provider's computer system via an "always-on" communications link there is no longer a meaningful measurement of the period of time the user spends "on-line". One method of charging the user is to charge a flat rate fee, optionally supplemented by a charge based on the throughput of data over the communications link.

One disadvantage of charging a flat-rate fee or a monthly or yearly subscription fee for a certain number of hours "on-line" is that neither accurately charges for the amount of use made of the connection. In particular, these common solutions can cost disproportionate amounts for higher and lower usage users.

Measuring the throughput of data packets over a communications link takes account of usage, but has a number of disadvantages as well. One disadvantage is that such measuring is a complex and processor-intensive task for the content or access provider since data packets can be numerous and of variable size.

In the prior art, International Patent Publication No. WO97 / 01920 describes a method for charging a user of a computer system for chargeable services used, in which the user makes a separate telephone call to a predetermined chargeable telephone number which enables the connection between the user's computer system and the access or content provider. The charging is carried out on the basis of the telephone connection.

US patent no. 5,745,556 describes a payment mechanism for a user to access the Internet. A telephone company supplies an access or content provider with a telephone number in which charges may be set by the called party. Charging is carried out through an actual or virtual telephone call made to this telephone number and charged to the user.

US patent no. 5,737,414 describes a method of using an access management computer to control the user's access to data. The user connects to the access management computer over a "dial-up" communications link and obtains a unique access message either from the "homepage" of the access provider or from a separate telephone call made to the access provider. The access provider also communicates to the user the charge for access to data based on the length of "on-line" connection time or some fixed charge.

International Patent Publication No. WO97 / 41586 describes a system capable of granting Internet access to users when direct connection to the usual access provider is impossible, impractical or prohibitively expensive. The user connects to an independent access provider, over a "dial-up" communications link, which provides access to the Internet by validating the user's entitlement via a remote access control. Charging is effected by sending billing information packets at regular intervals to a co-ordinator.

European Patent Application No. EP-A-0 866 596 describes method and apparatus for charging for Internet Telephony. When a caller connects to an Internet access provider in order to make a voice call with another caller, the access provider sends information to a billing server concerning the identities of the callers, the beginning time of the call, the identity of the access provider and various set-up parameters of the call. During the call the billing server receives periodic updated information, and the access provider notifies the billing server at the end of the call. The billing server charges the appropriate caller based on the information provided to it which may include information on call routing, packet density and voice enhancement.

United States Patent No. 5,790,548 describes a system and method for providing access to services such as video on demand over a PSTN copper twisted-pair line using an "always-on" connection, such as ADSL. The document refers to methods of charging a user such as charging a flat fee or tracking the amount of user traffic throughput carried by the network.

In US patent 5 862 335, issued on 19^{th} January 1999 (after the priority date of the present application), there is disclosed a method of and apparatus for monitoring logical connections and file transfers in a computer network. As a result of this monitoring, a database is generated recording information such as the identity of the end-point computers of a logical connection or file transfer, when connections or file transfers begin and end, and how much information is exchanged. This information may be used for various functions including billing computer users.

WO98/20646 describes a system and method for transferring information which also enables access to Internet and alike networks or parts thereof from a user's own computer by requesting rights from the holder of rights or similar during a terminal session. A default interface is described which enables a user to pay only for billing corresponding to actual use, where use is determined by requesting access to information via a firewall. The user must request access from a router or switch (the firewall) to receive information, and access is granted only in dependence on the rights a user has already by using a look-up table to determine if the IP destination address, area, or port can be accessed by the user's sending IP address.

The monitoring is performed by a network monitor computer which is connected via an interface unit to the network and which intercepts all data packets exchanged by the network and creates a copy of them for analysis. A network management engine, running on the network monitoring computer, analyses the copied data packets to determine whether they form part of an existing logical connection/file transfer or a new one by searching its database records. New records are created for new logical connections/file transfers whereas existing records are updated for existing logical connections/file transfers. Thus, the network monitoring computer builds up a historical database of information relating to logical connections and file transfers in the network.

Also of interest is the paper entitled "Usage-Based Cost Recovery in Internetworks" by Ruth and Mills, published in Business Communications Review, Vol. 22, No.7, 1^{st} July 1992, pages 38-42. This paper describes various approaches to charging for access to the Internet. The document describes why flat-rate accounting mechanisms are so prevalent and why usage-based accounting is so complex. The document describes a number of approaches to usage-based accounting all of which involve packet monitoring or analysing.

The document assumes that the Internet is basically a "connectionless" environment. Interestingly, on page 39, left hand column, at paragraphs 2-3 the author mentions the existence of an identifiable connections used by protocols such as TCP/IP, but discounts the possibility of usage-based accounting using these connections because "the higher-level protocol headers are not processed by the network equipment where accounting takes place".

### Summary of the Invention

Embodiments of the present invention are set out in the appended claims, in which a first aspect of the invention relates to a method of generating charging data relating to the use of a communications network link arranged to enable information to be passed between a computer system (10) operated by a user and a computer system (20,30) arranged to provide the user with content over said communications network link, the communications network link involving at least one client/server relationship comprising a plurality of logical connections, the method comprising the following steps: detecting in at least one logical connection of said client/server relationship at least one event causing a change in a state of at least one logical connection defined by at least a client network layer address, a client transport layer address, a server network layer address and a server transport layer address, recording data (220) created in response to the at least one event detected; and generating charging data on the basis of the recorded data, and the method is characterised over WO 9820646 by further comprising: a computer system (20,30) arranged to provide the user with access to said communications link performing the steps of: monitoring changes in the state of logical connections between the user's computer system (10) and the computer system (20,30) arranged to provide the user with content, wherein the use of the logical connections provides said content to the user; and creating the data (220) when the use of the communications link causes at least one of said monitored logical connections to change its stage by being generated and/or terminated.

A second aspect of the invention as set out in the accompanying claims relates to apparatus arranged to perform a method of generating charging data relating to the use of a communications network link arranged to enable information to be passed between a computer system (10) operated by a user and a computer system (20,30) arranged to provide the user with content over said communications network link, the communications network link involving at least one client/server relationship comprising a plurality of logical connections, the apparatus comprising: computational means for detecting in at least one logical connection of said client/server relationship at least one event causing a change in a state of at least one logical connection defined by at least a client network layer address, a client transport layer address, a server network layer address and a server transport layer address, storage means for recording data created in response to the at least one event detected, and means to generate charging data on the basis of the recorded data, the apparatus being characterised over W0 98/20646 by further comprising: a computer system (20,30) arranged to provide said user with access to the communications link and including: means to monitor changes in the state of logical connections between the user's computer system (10) and the computer system (20,30) arranged to provide the user with content, wherein the use of the logical connections provides said content to the user; and means to create the data (220) when the use of the communications link causes at least one of said monitored logical connections to change its state by being generated and/or terminated.

A third aspect of the invention as set out in the accompanying claims relates to a server program arranged to implement steps in a method according to the first aspect of the invention.

In particular, the logical connections monitored are logical connections created between a client computer system and a server computer system at the network and transport layers of the International Standards Organisation data communications referenced model (ISO reference model). These logical connections are uniquely defined by four addresses in the ISO reference model. These addresses are: a client network layer address, a client transport layer address, a server network layer address and a server transport layer address. In accordance with the invention, data is recorded in response to the changes of state of the connections detected by the monitoring and charging data is then generated on the basis of the recorded data.

In a two party scenario, where a user connects directly to a content provider, the user's computer system acts as the client and the content provider's computer system acts as the server.

In a three party scenario, where a user connects to an access provider which in turn connects to a content provider, there are two client/server relationships. Firstly, between the user's computer system acting as client and the access provider's computer system acting as server and, secondly, between the access provider's computer acting as client and the content provider's computer acting as server. In this scenario, the access provider's computer system is referred to as a proxy server and/or a proxy client.

In a further scenario, a user connects directly to a provider of both content and access to further content providers. This content/access provider may in turn connect to a further content provider depending on the user's request. In this scenario, there are either one or two client/server relationships depending on the user's request.

The logical connections are established between a client and a server to provide a logical conduit through which information may be passed. The client typically sends a request to the server which carries out the request and responds to the client. Logical connections are normally established specifically for a single request-response transaction or for a plurality of related request-response transactions and terminated after it or they have finished. During the lifetime of a logical connection, any number of data packets may be sent and received through it depending on the nature of the request-response transaction or transactions.

By monitoring changes in the state of logical connections, such as the establishment and termination of the logical connections between a client and a server, data may be recorded such as the number of logical connections established and terminated, the time and date such connections are established and terminated, the duration of such connections, and any of the four addresses uniquely identifying the logical connection i.e. the client network layer address, the client transport layer address, the server network layer address and the server transport layer address. Additional data may be recorded, if required, such as the number and size of data packets sent and received over such logical connections and information extracted from the header information prepended to the data packets. Charging data may then be generated on the basis of the recorded data.

The present invention offers various advantages over different ones of the solutions described in the prior art. One problem for content providers and access providers, particularly for those operating in the field of the Internet, is determining how to charge a user appropriately for the use he makes of a connection over a "dial-up" communications link. Another problem for content providers and access providers is determining how to charge a user appropriately for the use he makes of a connection over an "always-on" communications link.

Another solution suggested in the prior art, whether for connection via an "always-on" or a "dial-up" communications links, is for the user to dial up a separate PSTN telephone call to enable the user to access content, to provide a meaningful measurement of "on-line" time or to allow appropriate charges to be set by the access or content provider through a special telephone number charging mechanism.

The present invention provides a flexible mechanism for generating charging data depending on the use made of connections over the communications network link, without the need for the complex, processor-intensive task of measuring data packet throughput, and without the need for a "dial-up" PSTN telephone call. The present invention may be applied to "dial-up" communications links as well as "always-on" communications links. However, preferable embodiments of the invention involve "always-on" communications links where the problem of appropriately charging for usage is more acute.

Embodiments of the present invention will now be described, by way of example only, with reference to the accompanying drawings in which:

### Description of Drawings

Figure 1 is a diagram showing a prior art communications network system;
Figure 2 is a diagram showing an embodiment of a communications network system in accordance with an embodiment of the present invention;
Figure 3 is a diagram showing logical connections established between a number of client computer systems and a multi-homed server computer system;
Figure 4 is a flow diagram showing user / access provider / content provider interactions in accordance with the present invention;
Figure 5 is a diagram showing the timeline of a number of logical connections in a client/server interaction; and
Figure 6 is a diagram showing a typical record created in response to monitoring logical connections in accordance with the present invention.

### Description of Typical Client/Server Logical Connections

Application Programming Interfaces (APIs) for programming clients and servers to handle logical connections are well-established and well-documented.

In one embodiment of the present invention, in the field of the Internet, the logical connections are Transmission Control Protocol/Internet Protocol (TCP/IP) socket connections and the API are the Sockets API originally developed by the Computer Systems Research Group at the University of California at Berkeley. The Sockets API provides well-documented routines for handling TCP/IP socket connections. For a detailed description of TCP/IP and the Sockets API see W. Richard Stevens' 'TCP/IP Illustrated Vols. 1-3' .

Each socket connection is uniquely defined by four addresses: the client IP address (i.e. the client network layer address), the client port number (i.e. the client transport layer address), the server IP address (i.e. the server network layer address), and the server port number (i.e. the server transport layer address).

IP addresses uniquely identify interfaces on particular computer systems connected to the Internet. For example, if the user were to connect directly to a content provider using a browser such as Netscape Navigator (TM) or Microsoft Internet Explorer (TM), the client network address would be the IP address of the user's computer system and the server network address would be the IP address of the content provider's computer system (or one of the IP addresses of the content provider's system where the content provider operates a multi-homed server).

Transport layer addresses are used in addition to IP addresses to identify particular connections. If the user directly connected to the content provider above were to access hypertext documents from the Web, the server transport layer address would be TCP port number 80 which is the well-known port for the Hypertext Transfer Protocol (HTTP). The user transport layer address would be an "ephemeral port number" i.e. a unique but arbitrary number from 1024 to 5000 assigned by the user's computer system to uniquely identify one client connection request. With some browser clients, several ephemeral ports are used simultaneously to speed up access of complex content such as multi-file Web pages.

The TCP/IP is a protocol suite that allows different computer systems to communicate with each other over the Internet. The various protocols that make up TCP/IP are arranged in a layered structure. TCP/IP is normally regarded as a four layer protocol suite with a link layer at the bottom, a network layer above that, a transport layer above that and an application layer at the top. The link layer normally includes the physical communications hardware plus device drivers to operate it. The network layer handles the movement of data packets around the network. IP, the Internet Protocol, is the most important protocol at this layer. Each network interface on each computer system connected to the Internet has a unique IP address. This enables IP to send data to the correct destination even though the data may take many different routes to get there. The transport layer handles the data to be sent over the Internet. It is responsible for dividing the data into appropriately sized packets for transmission. The two dominant protocols at this layer are TCP and UDP. TCP, the Transmission Control Protocol, provides a reliable flow of data by requiring the receiving computer system to acknowledge receipt of data packets sent. However, UDP, the User Datagram Protocol, provides a simpler service in which data packets, known as datagrams, are transmitted with no guarantee that they will arrive at their destination. The application layer handles the particular service being used.

There are many different TCP/IP applications available, for example, the File Transfer Protocol (FTP), the Simple Mail Transfer Protocol (SMTP), the Simple Network Management Protocol (SNMP), the Trivial File Transfer Protocol (TFTP), the Hypertext Transfer Protocol (HTTP), and the Network News Transfer Protocol (NNTP). Different applications use different transport layer protocols. FTP, SMTP, HTTP and NNTP use TCP, for example, whereas TFTP and SNMP use UDP. TCP and UDP identify which applications data packets are intended for using 16 bit port numbers. Applications are normally associated with well-known port numbers. For example, every TCP/IP server offering FTP provides service on TCP port 21, and every server offering TFTP provides service on UDP port 69.

When an application sends data over the Internet, the data is sent down the protocol stack. Each layer adds required control information by prepending headers to the data it receives. For example, IP adds header information including the source and destination IP addresses and both TCP and UDP add information including the source and destination port numbers. The process of prepending successive headers to the data is called encapsulation. The process of reading and removing the headers at the receiving end is known as demultiplexing.

### Description of Prior Art Charging System

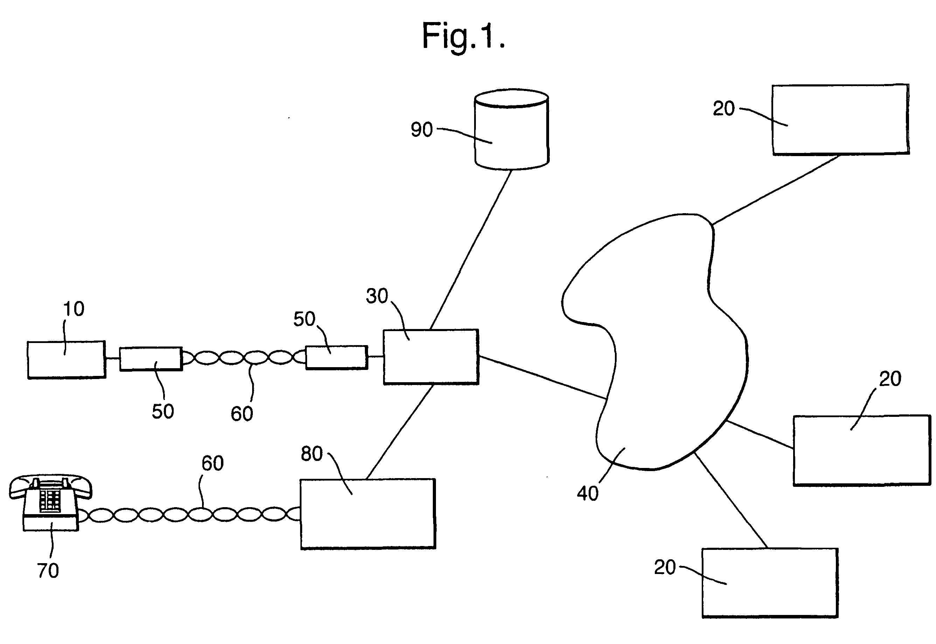

Figure 1 shows an example, according to the prior art, of how a user's computer system 10 may be connected to a number of content provider's computer systems 20 over the Internet 40 via an access provider's computer system 30. The user's computer system 10 is connected to the access provider's computer system 30 by means of, for example, a pair of modems 50 transmitting and receiving signals over copper twisted-pair telephone lines 60. In some instances of the prior art, the user also makes an ordinary PSTN telephone call from a telephone 70 to the access provider 30 via a telecommunications operator 80. Charging information may be generated by the access provider 30 and stored in a data storage means 90.

### Detailed Description of the Invention

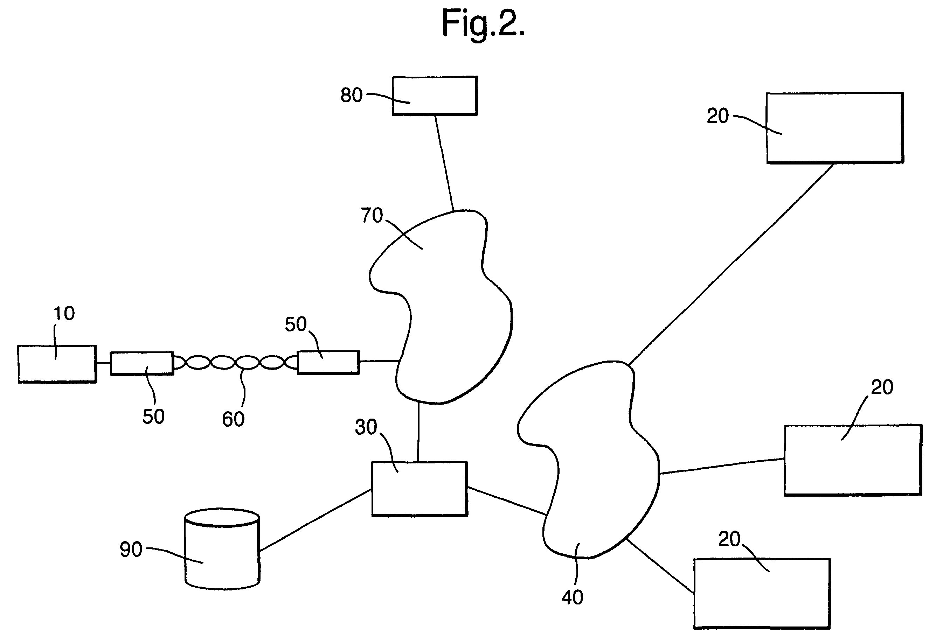

Figure 2 shows how a user's computer system 10 is connected to a content provider's computer systems 20 via an access provider's computer system 30 in one embodiment of the present invention according to the three-party scenario described above.

The access provider's computer system 30 is connected to the content provider's computer system 20 through the Internet 40, for example, or some other general communications network. The user's computer system 10 is connected to the access provider's computer system 30 by means of a pair of xDSL terminal units 50 transmitting and receiving digital signals over a twisted-pair telephone line 60, for example. The remote xDSL terminal unit is connected to the access provider's computer system 30 through a permanent virtual connection in an Asynchronous Transfer Mode (ATM) network 70, for example. The permanent connections between the user's computer system 10 and the access provider's computer system 30 over the ATM network 70 are managed by the network management system 80.

In a further embodiment of the present invention, according to the two-party scenario described above, computer system 30 is a content provider and is able to provide content to the user's computer system 10 via the permanent virtual connection over the ATM network 70, for example.

In a further embodiment of the present invention, according to the further scenario described above, computer system 30 is a provider of both content and access. Computer system 30 is connected and able to provide content to the user's computer system 10 as described above in both the embodiments according to the two- and three-party scenarios.

In all three embodiments, computer system 30 monitors logical connections made between the user's computer system 10 and itself and may monitor logical connections made between itself and the content provider's computer systems 20, if required. Data is created in response to changes in the states of these logical connections detected by the monitoring and is recorded in a data storage means 90. Charging data generated on the basis of the recorded data is also stored in the data storage means 90, or may be recorded in a further data storage means (not shown).

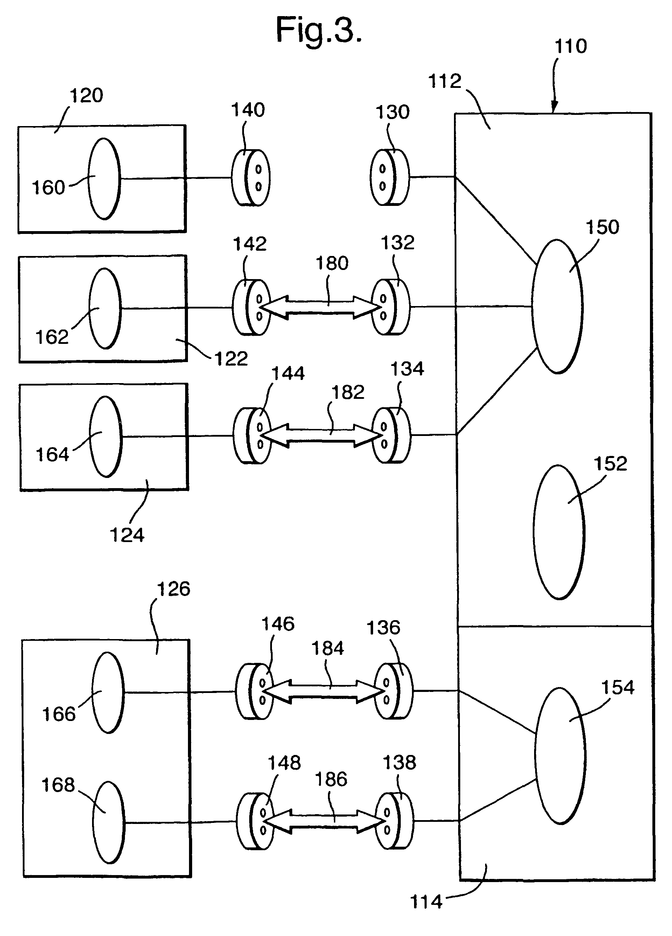

Figure 3 shows a number of logical connections that may be created between a multi-homed server 110 and a number of clients 120, 122, 124 and 126 in the field of the Internet. With a multi-homed server design, server 110 may have two IP addresses 112 and 114 at the same computer system. Also, server 110 may offer a number of different services operating out of different ports 150 and 152 each having different port numbers. Also, since server 110 is a multi-homed server, it may offer one of the same services out of port 154 as out of ports 150 or 152, or it may offer a different service with a different port number. Furthermore, server 110 may offer the same service operating out of the same port, for example port 150, to a number of clients 120, 122 and 124.

Servers may be concurrent or iterative. Iterative servers only handle the requests of one client at a time, whereas concurrent servers can handle multiple requests from multiple clients simultaneously. In the Sockets API implementation, a typical concurrent server will create a passive socket 130 and bind it to the port 150 of a well-known service. Socket 130 will be placed in a listening state and will be able to accept requests to establish socket connections with another socket 140 created by client 120 and bound to a port 160 for example. Port 160 is not associated with a particular service or request, but is an "ephemeral" port assigned a unique port number on that client.

Socket connections 180 and 182 show how two clients 122 and 124 with ports 162 and 164 may be connected to server 110 operating a well-known service out of port 150 via two sockets 132 and 134 at the server, both bound to port 150, and via two sockets 142 and 144 at the two clients. The server sockets 132 and 134 are known as active sockets because they are actively connected to client sockets. In a concurrent server, these two server sockets are normally handled under separate processes or threads. When a passive socket 130 bound to a port 1 50 of a well-known service receives a request to establish connections with a client socket 140, the server normally spawns a new process or thread with a new socket to provide the service leaving itself free to accept further requests from further clients. Once the client request has been dealt with, the active socket between the client and the server is dropped. This system allows a concurrent server to service more than one client at the same time and on the same port. Concurrent servers may also offer more than one service at the same time by creating a number of passive sockets bound to the well-known ports of the services offered. Normally, the individual sockets would be handled under separate processes or threads.

Additionally, a server may create two sockets 1 36 and 138 bound to the port 154 of a well-known service and connected to two sockets 146 and 148 bound to two ephemeral ports 166 and 168 of one client 126. In this case, the socket connections 184 and 186 are uniquely identified despite the fact that the same client has established connections with the same server on the same server port because the ephemeral client ports 166 and 168 are represented by unique port numbers.

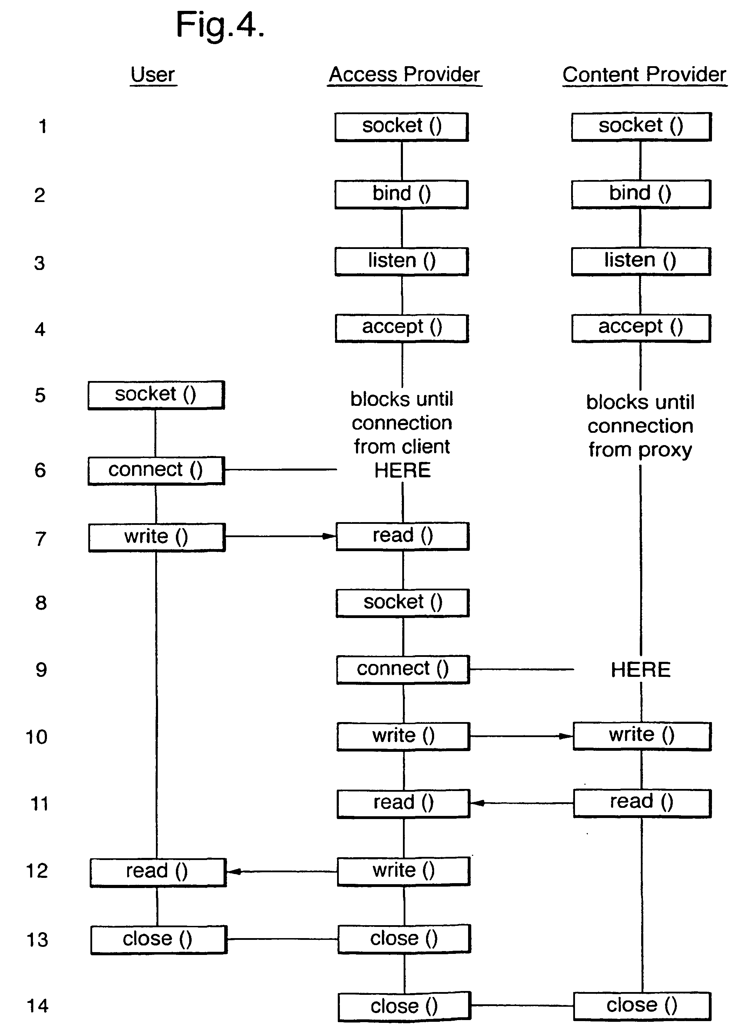

Figure 4 shows an interaction between the computer systems of a user, an access provider and a content provider in a Sockets API implementation. In this illustration, the access provider's computer system and the content provider's computer system are operating a TCP connection-oriented service such as HTTP or NNTP and are designed as iterative servers. The boxes represent the routine calls made in the Sockets API to perform operations on TCP sockets. Boxes appearing under different columns but on the same line represent events occurring at different computer systems but at about the same time.

In the three party scenario, the access provider's computer system, acting as a proxy server, creates a socket by calling the socket() routine call at line 1. At line 2 the access provider's computer system binds the socket to a port. At line 3 the access provider's computer system puts the socket in a listening state and at line 4 the access provider's computer system calls the accept() routine call which blocks the process until a request for connection is received. Up to this point, the socket created by the access provider's computer system is in a passive state, i.e. it has not established a connection with another socket.

Similarly, the content provider's computer system creates a socket, binds it to a port, puts it in a listening state and calls the accept() routine call for its own socket (lines 1 to 4).

Meanwhile, the user's computer system creates a socket at line 5 and calls the connect() routine call at line 6. The Web browser client might bind the socket to a port itself but normally leaves this to the kernel of the user's computer system since the socket must be bound to a unique ephemeral port in any event. The user connect() routine call attempts to establish a socket connection with a server at a particular IP address and on a particular port representing a well-known service that the user is attempting to access.

The user's client program will be set up to connect to the proxy server of the access provider. For example, with Web browser client programs such as Netscape Navigator (TM) or Microsoft Internet Explorer (TM), there are normally options to set up the appropriate addresses for proxy servers within the browsers' configurations.

The user's connect() routine call attempts to establish a connection with the access provider's computer system by sending and receiving data packets which correspond to a three-way handshake. The user's computer system first sends a TCP 'SYN' (synchronise) flag to the access provider's computer system which responds with a SYN flag of its own and an 'ACK' flag to acknowledge the user's SYN. Finally, the user's computer system responds with an ACK flag to acknowledge the access provider's SYN. The SYN flags serve to synchronise data packet sequence numbers maintained at client and server. These sequence numbers allow the TCP/IP stacks to fragment the data to be transmitted into a number of sequenced data packets of a suitable size and reassemble them again after transmission.

Once the three-way handshake is complete the TCP socket connection is established. Once the user's computer system has established connections with the access provider's computer system, the access provider's accept() routine call returns, i.e. it stops blocking and continues executing the process. At line 7 the user's computer system forwards one or more data packets to the access provider's computer system, for example a request to get a Web page from the content provider. This is achieved through a write() routine call at the user's computer system and a read() routine call at the access provider's computer system. At line 8 the access provider's computer system, this time acting as a proxy client, creates a new socket and at line 9 attempts to connect it to the content provider's computer system as described above. If the connection is successfully established, the accept() routine call of the content provider's computer system returns at this point. Thus, the access provider's computer system now has two sockets actively connected to sockets at the user's computer system and at the content provider's computer system.

At line 10 the access provider's computer system forwards the user's data packets, eg the Web page request, to the content provider's computer system. At line 11 the content provider's computer system sends one or more data packets to the access provider's computer system in response, for example the requested Web page. At line 12 the access provider's computer system forwards the data packets to the user's computer system which, for example, displays the Web page.

At line 13 the user's computer system and the access provider's computer system close their sockets and thus terminate the connection between them, and at line 14 the access provider's computer system and the content provider's computer system close their sockets and terminate the connection between them. TCP normally terminates connections by sending a 'FIN' (finished) flag from each end of the connection and an ACK flag to acknowledge the FIN. Sometimes, TCP terminates connections by sending an 'RST' (reset) flag instead of a FIN flag.

This process is typical where both the access provider and the content provider are operating iterative servers. Where the servers are concurrent, a new process is spawned after the accept() routine call returns in each case. In the new process, a new socket is created and connected to the client socket to provide the service to the client whilst the passive socket remains free to accept requests for socket connections from other clients.

Figure 4 may be adapted to show the typical interactions between the computer systems of a user and a content provider in the two-party scenario described above by removing lines 8 to 11, removing the column entitled 'Content Provider' and renaming the column entitled 'Access Provider' to 'Content Provider'.

Figure 4 may be adapted to show the typical interactions between the computer systems of a user, a content/access provider and a further content provider in the further scenario described above by renaming the column entitled 'Access Provider' to 'Content/Access Provider' and adding parentheses around lines 8 to 11 to represent the potential connection between the content/access provider's computer system and the further content provider's computer system.

In all cases, whether in the two- or three- party scenario or the further scenario and whether the servers are iterative or concurrent, the present invention is implemented by the addition of certain program routines in a server program.

In the three party scenario, routines are inserted in the access provider server program in between the steps of lines 6 and 7 to record data concerning the establishment of the connection with the user's computer system and in between the steps of lines 13 and 14 to record data concerning the termination of the connection with the user's computer system. Similarly, routines are inserted to record data concerning the establishment of a connection with the content provider in between the steps of lines 9 and 10 and the termination of the connection with the content provider after line 14, if required.

In the two party scenario, routines may be similarly inserted at corresponding places in the content provider server program to record data concerning the establishment and termination of connections with the user's computer system.

In the further scenario, routines may be similarly inserted at corresponding places in the content/access provider server program to record data concerning the establishment and termination of connections with the user's computer system and/or the further content provider's computer system.

Routines are inserted into server programs to record a variety of data concerning the establishment and termination of socket connections such as the number of socket connections established and terminated with the user's computer system, the time and date of establishment and termination of connections with the user's computer, and the duration of socket connections with the user's computer system. Details of the IP address of the user's computer system and the IP address and port number, representing the service provided, of the content provider's computer system may also be recorded. Information may also be extracted and recorded from the TCP/IP headers prepended to the data packets passed. Which and how many of such routines are inserted will depend on the data desired to implement a particular charging mechanism.

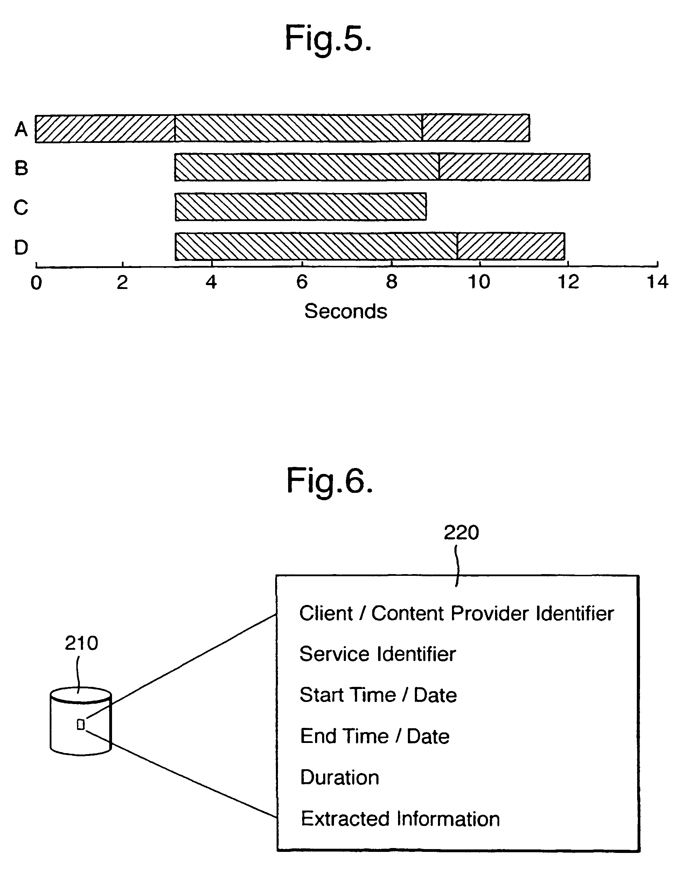

Figure 5 shows the timeline of a number of logical connections in a typical two party client/server interaction between a user's browser and a content provider's HTTP server over the Internet. When using HTTP version 1.0 browsers such as Netscape Navigator sometimes create a number of connections, usually up to 4 at a time, to download data quickly. Here, for the purpose of illustration, a browser has created 8 connections in total to download a Web homepage and 7 graphic images. The 8 separate bars in Figure 5 represent the 8 connections. At row A, the first connection is established between the browser and the HTTP server to get a basic Web HTTP homepage file, for example. In this example, the HTTP homepage file refers to 7 associated graphic image sources. Once the HTTP homepage file has been sent, the connection is terminated. Immediately thereafter, the browser establishes 4 connections in parallel at rows A, B, C, and D to download the graphic image files from the HTTP server. Once each of these are downloaded, the connections are immediately terminated and new connections established to download the remaining images, if required. The content provider's computer system monitors changes in the state of these connections as described above and record data in response to the monitoring as described in more detail below.

In the three party scenario, the browser establishes connections with the proxy server of an access provider which in turn establishes corresponding connections with the HTTP server of the content provider. Thus, in this example there would be 16 connections in total. The access provider's computer system monitors changes in the state of these connections as described above and records data in response to the monitoring as described in more detail below. In one embodiment of the present invention, the access provider's computer system monitors and records data concerning only the connections with the user's browser, or, in another embodiment, data concerning only the connections with the content provider's server, or, in a further embodiment, data concerning both sets of connections. The choice of embodiment depends on the charging mechanism preferred.

In the further scenario, the browser establishes connections with the proxy server of an content/access provider which may, depending on the user's request, in turn establish corresponding connections with the HTTP server of a further content provider. The content/access provider's computer system monitors changes in the state of these connections as described above and records data in response to the monitoring as described in more detail below. In one embodiment of the present invention, the content/access provider's computer system monitors and records data concerning only the connections with the user's browser, or, in another embodiment, data concerning both the connections with the user's computer system and the further content provider's server. The choice of embodiment depends on the charging mechanism preferred.

HTTP 1.1, a later version of HTTP 1.0, differs from HTTP 1.0 in a number of respects. One respect of relevance to the present invention is the inclusion of persistent connections and pipelining.

HTTP 1.1 defines persistent connections as to the default method for connections in client/server interactions. Instead of opening and closing a single connection for each request-response transaction between a client and a server, an HTTP 1.1 client or server will maintain an opened connection for multiple request-response transactions, until such time as either the client or the server sends a "close" token in the HTTP connection header. This then indicates that the request-response transaction is to be the last for that connection and that once the transaction is completed the connection between the client and the server may be dropped. Both client and server may specify time-outs when using persistent connections in HTTP 1.1 so that idle connections are not maintained indefinitely.

HTTP 1.1 persistent connections also allow pipelining of requests and responses to requests so that a client may send multiple requests to a server without the need to wait for a response to each request to arrive before issuing a new request.

HTTP 1.1 still allows clients and servers to establish multiple parallel connections, but the advantage of doing this is not so great as with HTTP 1.0 because the combination of persistent connections and pipelining requests and responses already improves the performance of the connections. The number of parallel persistent connections established between a client and a server in HTTP 1.1 is normally limited to a maximum of two.

In the three party scenario, where a client connects to a proxy server of an access provider using HTTP 1.1 persistent connections, and the proxy server in turn connects to the server of a content provider, then the proxy server of the access provider should also use persistent connections in its connection with the content provider's server.

In the further scenario, where a client connects to a proxy server of an content/access provider using HTTP 1.1 persistent connections, and the proxy server in turn connects to the server of a further content provider, then the proxy server of the content/access provider should also use persistent connections in its connection with the further content provider's server.

Monitoring the changes in the state of HTTP 1.1 persistent connections, in the two or three party scenario and in the further scenario, is carried out in the same way as monitoring changes in the state of HTTP 1.0 connections described above.

Figure 6 shows a typical data record 220 that may be created in respect of a single logical connection. Data storage means 210 may be used to store such records. For example, in the field of the Internet, the User/Content Provider Identifier item represents the IP address of the user's computer system and, in the three party scenario, the IP address of the content provider's computer system. The Service Identifier item represents the port number of the well-known service offered by the access or content provider. The Start Time/Date item represents the point at which the logical connection was established and the End Time/Date item represents the point at which the logical connection was terminated. The Duration item represents the period of time during which the logical connection was established. The Extracted Information item represents further information that may be extracted from the data packets sent and received over the logical connection. For example, this item might include details of URL (Uniform Resource Locator) of the page requested and received, the size of those data packets, and other information extracted from the headers prepended to the data packets as required.

In other embodiments of the present invention various combinations of the recordable items listed above are recorded.

In an embodiment recording only the User Identifier, the charging data generated would simply depend on the number of logical connections created.

In other embodiments in which other combinations of the recordable items are recorded, the charging data generated may depend on other factors such as the duration of logical connections, the start time and date or end time and date of any such logical connections, and the type of service offered to the user. For example, in the field Internet, a content provider or an access provider might want to charge differently for the HTTP service than for the NNTP service.

In one embodiment at least the User Identifier, the Service Identifier, the Start Time/Date, and the End Time/Date is recorded. From this data, the duration of each logical connection can be deduced. With this data, the charges could be generated based on the total duration of the logical connections and the type of service provided to the user, with different rates possibly being applied to different periods of the day or other periodic cycles.

Additionally, if more charging data is required, more detailed information may be recorded such the number and size of data packets sent and received, and the information extracted from headers prepended to those data packets. For example, information may be extracted from the IP header, UDP header, TCP header, HTTP header and NNTP header.

In a further embodiment of the present invention, the program routines inserted into the server program do not record data for the logical connections individually, but record data relating to the cumulative duration of those connections within a predefined period of time.

In this embodiment, the routines inserted into the server program between the steps in Figure 4 of lines 6 and 7, 9 and 10, 13 and 14 and after line 14 described above start and stop a number of timers maintained by the computer system when logical connections are established and terminated respectively. In the case where more than one logical connection is established between the user's computer system and the access or content provider's computer system within the predefined time period, for example within a 24 hour period, a corresponding number of timers need to be maintained by the access or content provider's computer system. For example, a number of different users' computer systems may establish logical connections with the access or content provider's computer system and, furthermore, each user's computer system may establish more than one logical connection with the access or content provider's computer system in parallel.

At the end of the predefined time period, the access or content provider's computer system would create a record of the cumulative duration of all logical connections established with a user's computer system for each individual user's computer system. Thus, a record would contain two items of information: the Client Identifier, and a Cumulative Duration item. At the end of each predefined time period, the access or content provider's computer system also resets all timers currently recording time so that the records created for the next predefined time period do not include time recorded for the time period ending.

One advantage of the above embodiment is that only one record is created for each user's computer system which establishes logical connections with the access or content provider's computer system within the predefined time period. This is likely to be a relatively lower number of records than in embodiments where a record is created for each logical connection established between each user's computer system and the access or content provider's computer system as described above.

Finally, charging data would be generated on the basis of the recorded data by means of a rating engine processing the recorded data and bills or invoices could then be generated by means of a billing or invoicing engine.

It will be apparent that there are alternative implementations of the invention in which data is recorded in response to monitoring changes in the state of logical connections at the network and transport layer of the OSI reference model between a client and a server and in which charging data is then generated on the basis of the recorded data.

The Sockets API is the standard API for developing client and server network communications programs for the Internet. However, the present invention has application to other data communication networks in which an access provider or a content provider wishes to charge a user for access. Accordingly, other embodiments of the present invention would involve monitoring logical connections using TCP/IP or other protocols and handled using other network communications APIs including the Transport Layer Interface (TLI) API, the Common Programming Interface for Communications (CPI-C) API, and the Named Pipes API, for example.

Communication using protocols other than TCP/IP could also be monitored and charged for using the present invention. Such other protocols include the Internet Packet Exchange/Sequenced Packet Exchange (IPX/SPX) protocol and the Wireless Application Protocol (WAP), for example.

It can be seen from the above that the present invention provides a flexible solution to the problems of appropriately charging a user of a computer system for access to content provided over a communications network either directly or via an access provider. The solution avoids the disadvantages of the prior art and provides a mechanism for generating charging data which is flexible, appropriate to the level of usage, easy to implement, low cost in terms of processor operations, and invisible to the user.

## Claims

1. A method of generating charging data relating to the use of a communications network link arranged to enable information to be passed between a computer system (10) operated by a user and a computer system (20,30) arranged to provide the user with content over said communications network link, the communications network link involving at least one client/server relationship comprising a plurality of logical connections, the method comprising the following steps:
detecting in at least one logical connection of said client/server relationship at least one event causing a change in a state of at least one logical connection defined by at least a client network layer address, a client transport layer address, a server network layer address and a server transport layer address,
recording data (220) created in response to the at least one event detected; and
generating charging data on the basis of the recorded data,
the method being **characterised by**:
a computer system (20,30) arranged to provide the user with access to said communications link performing the steps of:
monitoring changes in the state of logical connections between the user's computer system (10) and the computer system (20,30) arranged to provide the user with content, wherein the use of the logical connections provides said content to the user; and
creating the data (220) when the use of the communications link causes at least one of said monitored logical connections to change its stage by being generated and/or terminated.

2. A method as claimed in claim 1, wherein the use of said logical connection comprises the use of a plurality of socket connections (180, 182, 184, 186).

3. A method as claimed in claim 2, wherein in said step of recording data (220) a record of the number of all socket connections established and terminated is determined.

4. A method as claimed in claim 2 or 3, wherein said plurality of socket connections (180, 821, 184, 186) are at least partially contemporaneous and relate to the same client/server relationship.

5. A method according to any one of claims 1 to 4 wherein the information is passed via the computer system (30) arranged to provide access to the user to the computer system (20) arranged to provide content to the user, and wherein the computer system (30) acts as a proxy client and a proxy server.

6. A method according to claim 5 wherein the charging data is generated by the access providing computer system (30).

7. A method according to claim 5 or 6, wherein a monitored logical connection comprises at least one socket connection created between the computer system (30) arranged to provide access to the user acting as proxy server and the computer system of the user acting as a client.

8. A method according to any one of claims 5 or 6, wherein a monitored logical connection comprises at least one socket connection (180, 182 184, 186) created between the computer system (30) arranged to provide access to the user acting as proxy client and the computer system (20) arranged to provide content to the user acting as a server.

9. A method according to claim 1, wherein the computer system (20,30) arranged to provide access to the user comprises the computer system (20) arranged to provide content to the user.

10. A method according to claim 9, wherein the charging data is generated by the computer system (20) arranged to provide content to the user.

11. A method according to any preceding claim, wherein at least one logical connection is selected from the group consisting of: a Transmission Control Protocol socket connection (180, 182 184, 186), a User Datagram Protocol socket connection (180, 182 184, 186) and an Internet Protocol socket connection (180, 182 184, 186).

12. A method according to any preceding claim wherein the recorded data comprises a record of information extracted from at least one header prepended to information passing between the computer system(20) arranged to provide content to the user and the computer system (10) of the user during the subsistence of the plurality of logical connections.

13. A method according to claim 16, wherein at least one header is selected from the group consisting of:
all Transmission Control Protocol / Internet Protocol network layer headers, all TCP/IP transport layer headers and all TCP/IP application layer headers.

14. A method according to any preceding claim, wherein the communications network link comprises a permanently activated communications network link.

15. Apparatus arranged to perform a method of generating charging data relating to the use of a communications network link arranged to enable information to be passed between a computer system (10) operated by a user and a computer system (20,30) arranged to provide the user with content over said communications network link, the communications network link involving at least one client/server relationship comprising a plurality of logical connections, the apparatus comprising:
computational means for detecting in at least one logical connection of said client/server relationship at least one event causing a change in a state of at least one logical connection defined by at least a client network layer address, a client transport layer address, a server network layer address and a server transport layer address,
storage means for recording data created in response to the at least one event detected, and
means to generate charging data on the basis of the recorded data,
the apparatus being **characterised by** further comprising:
a computer system (20,30) arranged to provide said user with access to the communications link including:
means to monitor changes in the state of logical connections between the user's computer system (10) and the computer system (20,30) arranged to provide the user with content, wherein the use of the logical connections provides said content to the user; and
means to create the data (220) when the use of the communications link causes at least one of said monitored logical connections to change its state by being generated and/or terminated.

16. Apparatus as claimed in claim 15, wherein said charging data is generated from the recorded data on the basis of the amount of time for which each said at least one logical connection comprising a socket connection (180, 182, 184, 186) is established.

17. Apparatus according to claim 16, wherein the computer system arranged to provide access to the user acts as a proxy server and a proxy client and is arranged to enable information to be passed between the content providing computer system (20) and the computer system (20) of the user.

18. Apparatus according to any one of claims 16 or 17, wherein at least one logical connection is selected from the group consisting of: Transmission Control Protocol socket connection (180, 182 184, 186), a User Datagram Protocol socket connection (180, 182 184, 186) and an Internet Protocol socket connection (180, 182 184, 186).

19. Apparatus as claimed in any one of claims 17 to 18, wherein the recorded data further comprises a record of information extracted from at least one header prepended to information passing between the computer system (20) arranged to provide content to the user and the computer system (10) of the user during the subsistence of the connections.

20. Apparatus as claimed in claim 19, wherein the at least one header comprises at least one selected from the group consisting of all Transmission Control Protocol / Internet Protocol network layer headers, all TCP/IP transport layer headers and all TCP/IP application layer headers.

21. Apparatus as claimed in any on of claims 15 to 20, wherein the communications network link comprises a permanently activated communications network link.

22. A server program arranged to implement steps in a method as claimed in any one of claims 1 to 14.

23. A method as claimed in any one of claims 1 to 14, wherein said content is transmitted in data packets.

## Patentansprüche

1. Verfahren zum Erzeugen von Daten für die Rechnungsstellung, die sich auf die Verwendung einer Verbindung mit einem Kommunikationsnetz beziehen, das dazu eingerichtet ist, zu ermöglichen, dass Informationen zwischen einem Rechnersystem (10), das von einem Benutzer betrieben wird, und einem Rechnersystem (20, 30) weitergeleitet werden, das dazu eingerichtet ist, dem Benutzer Inhalte über die Verbindung mit dem Kommunikationsnetz bereitzustellen, wobei an der Verbindung zu dem Kommunikationsnetz wenigstens eine Client/Server-Beziehung beteiligt ist, die mehrere logische Verbindungen umfasst, wobei das Verfahren die folgenden Schritte umfasst:
Erfassen wenigstens eines Ereignisses in wenigstens einer logischen Verbindung der Client/Server-Beziehung, das eine Zustandsänderung wenigstens einer logischen Verbindung verursacht, die durch wenigstens eine Adresse einer Netzwerkschicht des Clients, eine Adresse einer Transportschicht des Clients, eine Adresse der Netzwerkschicht des Servers und eine Adresse der Transportschicht des Servers definiert ist,
Aufnehmen von Daten (220), die als Reaktion auf das wenigstens eine erfasste Ereignis erzeugt werden; und
Erzeugen von Daten für die Rechnungsstellung auf Basis der aufgenommenen Daten, wobei das Verfahren **gekennzeichnet ist durch**:
ein Rechnersystem (20, 30), das dazu eingerichtet ist, dem Benutzer Zugang zu der Kommunikationsverbindung zu geben, und das
die folgenden Schritte ausführt:
Überwachen von Änderungen des Zustands der logischen Verbindung zwischen dem Rechnersystem (10) des Benutzers und dem Rechnersystem (20, 30), das dazu eingerichtet ist, dem Benutzer Inhalte bereitzustellen, wobei die Verwendung der logischen Verbindungen dem Benutzer die Inhalte bereitstellt; und
Erzeugen der Daten (220), wenn die Verwendung der Kommunikationsverbindung veranlasst, dass wenigstens eine der überwachten logischen Verbindungen ihren Zustand ändert, indem sie erzeugt und/oder beendet wird.

2. Verfahren nach Anspruch 1, bei dem die Verwendung der logischen Verbindung die Verwendung mehrerer Socket-Verbindungen (180, 182, 184, 186) umfasst.

3. Verfahren nach Anspruch 2, bei dem in dem Schritt des Aufnehmens von Daten (220) ein Datensatz mit der Anzahl aller aufgebauten und beendeten Socket-Verbindungen ermittelt wird.

4. Verfahren nach Anspruch 2 oder 3, bei dem die mehreren Socket-Verbindungen (180, 182, 184, 186) wenigstens teilweise gleichzeitig bestehen und sich auf die selbe Client/Server-Beziehung beziehen.

5. Verfahren nach einem der Ansprüche 1 bis 4, bei dem die Informationen durch das Rechnersystem (30) weitergeleitet werden, das dazu eingerichtet ist, dem Benutzer Zugang zu dem Rechnersystem (20) zu geben, das dazu eingerichtet ist, dem Benutzer Inhalte bereitzustellen, und bei dem das Rechnersystem (30) als ein Proxy-Client und als ein Proxy-Server arbeitet.

6. Verfahren nach Anspruch 5, bei dem die Daten für die Rechnungsstellung von dem Rechnersystem (30) erzeugt werden, das den Zugang bereitstellt.

7. Verfahren nach Anspruch 5 oder 6, bei dem eine überwachte logische Verbindung wenigstens eine Socket-Verbindung umfasst, die zwischen dem Rechnersystem (30), das dazu eingerichtet ist, dem Benutzer den Zugang bereitzustellen, und das als Proxy-Server arbeitet, und dem Rechnersystem des Benutzers hergestellt ist, das als Client arbeitet.

8. Verfahren nach einem der Ansprüche 5 oder 6, bei dem eine überwachte logische Verbindung wenigstens eine Socket-Verbindung (180, 182, 184, 186) umfasst, die zwischen dem Rechnersystem (30), das dazu eingerichtet ist, dem Benutzer den Zugang bereitzustellen, und das als Proxy-Client arbeitet, und dem Rechnersystem (20) hergestellt ist, das dazu eingerichtet ist, dem Benutzer Inhalte bereitzustellen, und das als Server arbeitet.

9. Verfahren nach Anspruch 1, bei dem das Rechnersystem (20, 30), das dazu eingerichtet ist, dem Benutzer den Zugang bereitzustellen, das Rechnersystem (20) umfasst, das dazu eingerichtet ist, dem Benutzer Inhalte bereitzustellen.

10. Verfahren nach Anspruch 9, bei dem die Daten für die Rechnungsstellung von dem Rechnersystem (20) erzeugt werden, das dazu eingerichtet ist, dem Benutzer Daten bereitzustellen.

11. Verfahren nach einem der vorangehenden Ansprüche, wobei wenigstens eine logische Verbindung aus der Gruppe ausgewählt wird, die aus folgendem besteht: einer Socket-Verbindung nach dem Übertragungssteuerungsprotokoll (180, 182, 184, 186), einer Socket-Verbindung nach dem Benutzer-Datagramm-Protokoll (180, 182, 184, 186) und einer Socket-Verbindung (180, 182, 184, 186) nach dem Internetprotokoll.

12. Verfahren nach einem der vorangehenden Ansprüche, bei dem die aufgenommen Daten einen Datensatz mit Informationen umfassen, die aus wenigstens einem Kopf entnommen worden sind, der Informationen vorangestellt ist, die zwischen dem Rechnersystem (20), das dazu eingerichtet ist, dem Benutzer Inhalte bereitzustellen, und dem Rechnersystem (10) des Benutzers während des Bestehens der mehreren logischen Verbindungen weitergeleitet werden.

13. Verfahren nach Anspruch 16, bei dem wenigstens ein Kopf aus der Gruppe ausgewählt wird, die aus folgendem besteht:
Alle Köpfe der Netzwerkwerkschicht nach dem Übertragungssteuerungsprotokoll/Internetprotokoll, alle Köpfe der Transportschicht nach TCP/IP und alle Köpfe der Anwendungsschicht nach TCP/IP.

14. Verfahren nach einem der vorangehenden Ansprüche, bei dem die Verbindung mit dem Kommunikationsnetz eine permanent aktivierte Verbindung mit dem Kommunikationsnetz umfasst.

15. Vorrichtung, die dazu eingerichtet ist, ein Verfahren zur Erzeugung von Daten für die Rechnungsstellung auszuführen, die sich auf die Verwendung einer Verbindung mit einem Kommunikationsnetz beziehen, die dazu eingerichtet ist, zu ermöglichen, dass Informationen zwischen einem Rechnersystem (10), das von einem Benutzer betrieben wird, und einem Rechnersystem (20, 30) weitergeleitet werden, das dazu eingerichtet ist, dem Benutzer über die Verbindung mit dem Kommunikationsnetz Inhalte bereitzustellen, wobei an der Verbindung mit dem Netzwerk wenigstens eine Client/Server-Beziehung beteiligt ist, die mehrere logische Verbindungen umfasst, wobei Vorrichtung folgendes umfasst:
eine Berechnungseinrichtung zum Erfassen eines Ereignisses in wenigstens einer logischen Verbindung der Client/Server-Beziehung, das eine Veränderung eines Zustands von wenigstens einer logischen Verbindung verursacht, die durch wenigstens eine Adresse der Netzwerkschicht des Kunden, eine Adresse der Transportschicht des Kunden, eine Adresse der Netzwerkschicht des Servers und eine Adresse der Transportschicht des Servers definiert ist,
eine Speichereinrichtung zum Aufnehmen von Daten, die als Reaktion auf das wenigstens eine erfasste Ereignis erzeugt werden, und
eine Einrichtung zum Erzeugen von Daten für die Rechnungsstellung auf Basis der aufgenommenen Daten,
wobei die Vorrichtung **dadurch gekennzeichnet ist, dass** sie weiter folgendes umfasst:
ein Rechnersystem (20, 30), das dazu eingerichtet ist, dem Benutzer einen Zugang zu der Kommunikationsverbindung bereitzustellen, das folgendes enthält:
eine Einrichtung, um Änderungen des Zustands von logischen Verbindungen zwischen dem Rechnersystem des Benutzers (10) und dem Rechnersystem (20, 30) zu überwachen, das dazu eingerichtet ist, dem Benutzer Inhalte bereitzustellen, wobei die Verwendung der logischen Verbindungen dem Benutzer den Inhalt bereitstellt; und
eine Einrichtung, die die Daten (220) erzeugt, wenn die Verwendung der Kommunikationsverbindung wenigstens eine der überwachten logischen Verbindungen veranlasst, ihren Zustand zu verändern, indem sie erzeugt und/oder beendet wird.

16. Vorrichtung nach Anspruch 15, bei der die Daten für die Rechnungsstellung aus den aufgenommenen Daten auf Basis der Länge der Zeit erzeugt werden, für die jede der wenigstens einen logischen Verbindungen, die eine Socket-Verbindung (180, 182, 184, 186) umfassen, aufgebaut ist.

17. Vorrichtung nach Anspruch 16, bei der das Rechnersystem, das dazu eingerichtet ist, dem Benutzer Zugang zu geben, als ein Proxy-Server und als ein Proxy-Client arbeitet und dazu eingerichtet ist, zu ermöglichen, dass Informationen zwischen dem Rechnersystem (20), das Inhalte bereitstellt, und dem Rechnersystem des Benutzers (20) weitergeleitet werden.

18. Vorrichtung nach einem der Ansprüche 16 oder 17, bei dem wenigstens eine logische Verbindung aus der Gruppe ausgewählt wird, die aus folgendem besteht: Socket-Verbindung nach dem Übertragungssteuerungsprotokoll (180, 182, 184, 186), Socket-Verbindung nach dem Benutzer-Datagramm-Protokoll (180, 182, 184, 186) und einer Socket-Verbindung nach dem Internetprotokoll (180, 182, 184, 186).

19. Vorrichtung nach einem der Ansprüche 17 oder 18, bei dem die aufgenommen Daten weiter einen Datensatz mit Informationen umfassen, die aus wenigstens einem Kopf entnommen sind, der Informationen vorangestellt ist, die zwischen dem Rechnersystem (20), das dazu eingerichtet ist, dem Benutzer Inhalte bereitzustellen, und dem Rechnersystem (10) des Benutzers während des Bestehens der Verbindungen weitergeleitet werden.

20. Vorrichtung nach Anspruch 19, bei der der wenigstens eine Kopf wenigstens einen umfasst, der aus der Gruppe ausgewählt ist, die aus allen Köpfen der Netzwerkschicht nach dem Übertragungssteuerungsprotokoll/Internetprotokoll, allen Köpfen der Transportschicht nach TCP/IP und allen Köpfen der Anwendungsschicht nach TCP/IP besteht.

21. Vorrichtung nach einem der Ansprüche 15 bis 20, bei der die Verbindung mit dem Kommunikationsnetz eine permanent aktivierte Verbindung mit dem Kommunikationsnetz umfasst.

22. Serverprogramm, das dazu eingerichtet ist, Schritte eines Verfahrens nach einem der Ansprüche 1 bis 14 zu durchzuführen.

23. Verfahren nach einem der Ansprüche 1 bis 14, bei dem die Inhalte in Datenpaketen übertragen werden.

## Revendications

1. Procédé de génération de données de taxation se rapportant à l'utilisation d'une liaison de réseau de communication conçue pour permettre que des informations soient transférées entre un système informatique (10) exploité par un utilisateur et un système informatique (20, 30) conçu pour fournir à l'utilisateur un contenu sur ladite liaison de réseau de communication, la liaison de réseau de communication impliquant au moins une relation client/serveur comprenant une pluralité de connexions logiques, le procédé comprenant les étapes suivantes :
la détection, dans au moins une connexion logique de ladite relation client/serveur, d'au moins un événement provoquant un changement d'un état d'au moins une connexion logique définie par au moins une adresse de couche réseau de client, une adresse de couche transport de client, une adresse de couche réseau de serveur et une adresse de couche transport de serveur,
l'enregistrement de données (220) créées en réponse à l'au moins un événement détecté, et
la génération de données de taxation d'après les données enregistrées,
le procédé étant **caractérisé par** :
un système informatique (20, 30) agencé pour fournir à l'utilisateur un accès à ladite liaison de communication exécutant les étapes consistant à :
surveiller les changements de l'état de connexions logiques entre le système informatique de l'utilisateur (10) et le système informatique (20, 30) agencé pour fournir à l'utilisateur le contenu, où l'utilisation des connexions logiques fournit ledit contenu à l'utilisateur, et
créer des données (220) lorsque l'utilisation de la liaison de communication amène au moins l'une desdites connexions logiques surveillées à changer d'état en étant engendrée et/ou parce qu'il y est mis fin.

2. Procédé selon la revendication 1, dans lequel l'utilisation de ladite connexion logique comprend l'utilisation d'une pluralité de connexions par point de communication (180, 182, 184, 186).

3. Procédé selon la revendication 2, dans lequel, dans ladite étape d'enregistrement de données (220), il est déterminé un enregistrement du nombre de toutes les connexions par point de communication établies et auxquelles il a été mis fin.

4. Procédé selon la revendication 2 ou 3, dans lequel ladite pluralité de connexions par point de communication (180, 821, 184, 186) sont au moins partiellement contemporaines et se rapportent à la même relation client/serveur.

5. Procédé selon l'une quelconque des revendications 1 à 4, dans lequel les informations sont transférées par l'intermédiaire du système informatique (30) conçu pour fournir un accès à l'utilisateur au système informatique (20) conçu pour fournir un contenu à l'utilisateur, et dans lequel le système informatique (30) agit en tant que client mandataire et serveur mandataire.

6. Procédé selon la revendication 5, dans lequel les données de taxation sont engendrées par le système informatique fournissant l'accès (30).

7. Procédé selon la revendication 5 ou 6, dans lequel une connexion logique surveillée comprend au moins une connexion par point de communication créée entre le système informatique (30) conçu pour fournir un accès à l'utilisateur, agissant comme serveur mandataire, et le système informatique de l'utilisateur agissant en tant que client.

8. Procédé selon l'une quelconque des revendications 5 et 6, dans lequel une connexion logique surveillée comprend au moins une connexion par point de communication (180, 182, 184, 186) créée entre le système informatique (30) conçu pour fournir un accès à l'utilisateur agissant en tant que client mandataire et le système informatique (20) agencé pour fournir un contenu à l'utilisateur agissant en tant que serveur.

9. Procédé selon la revendication 1, dans lequel le système informatique (20, 30) conçu pour fournir un accès à l'utilisateur comprend le système informatique (20) conçu pour fournir un contenu à l'utilisateur.

10. Procédé selon la revendication 9, dans lequel les données de taxation sont engendrées par le système informatique (20) conçu pour fournir un contenu à l'utilisateur.

11. Procédé selon l'une quelconque des revendications précédentes, dans lequel au moins une connexion logique est sélectionnée parmi le groupe constitué d'une connexion par point de communication selon le protocole de commande de transmission (180, 182, 184, 186), une connexion par point de communication selon le protocole de datagramme d'utilisateur (180, 182, 184, 186), et une connexion par point de communication selon le protocole Internet (180, 182, 184, 186).

12. Procédé selon l'une quelconque des revendications précédentes, dans lequel les données enregistrées comprennent un enregistrement d'informations extraites d'au moins un en-tête ajouté au début d'informations qui sont transférées entre le système informatique (20) conçu pour fournir un contenu à l'utilisateur et le système informatique (10) de l'utilisateur au cours de l'existence de la pluralité de connexions logiques.

13. Procédé selon la revendication 16, dans lequel au moins un en-tête est sélectionné parmi le groupe constitué de :
tous les en-têtes de couches réseau de protocole de commande de transmission/protocole Internet, tous les en-têtes de couches transport de protocole TCP/IP et tous les en-têtes de couches application de protocole TCP/IP.

14. Procédé selon l'une quelconque des revendications précédentes, dans lequel la liaison de réseau de communication comprend une liaison de réseau de communication activée de manière permanente.

15. Dispositif conçu pour exécuter un procédé consistant à engendrer des données de taxation se rapportant à l'utilisation d'une liaison de réseau de communication agencée pour permettre que des informations soient transférées entre un système informatique (10) exploité par un utilisateur et un système informatique (20, 30) conçu pour fournir un contenu à l'utilisateur sur ladite liaison de réseau de communication, ladite liaison de réseau de communication impliquant au moins une relation client/serveur comprenant une pluralité de connexions logiques, le dispositif comprenant :
un moyen de calcul destiné à détecter dans au moins une connexion logique de ladite relation client/serveur au moins un événement provoquant un changement de l'état d'au moins une connexion logique définie par au moins une adresse de couche réseau de client, une adresse de couche transport de client, une adresse de couche réseau de serveur et une adresse de couche transport de serveur,
un moyen de mémorisation destiné à enregistrer des données créées en réponse au au moins un événement détecté, et
un moyen pour engendrer des données de taxation d'après les données enregistrées, le dispositif étant **caractérisé par le fait qu'**il comprend en outre :
un système informatique (20, 30) conçu pour fournir audit utilisateur un accès à la liaison de communication comprenant :
un moyen pour surveiller des changements de l'état de connexion logiques entre le système informatique de l'utilisateur (10) et le système informatique (20, 30) conçu pour fournir un contenu à l'utilisateur, dans lequel l'utilisation des connexions logiques fournit ledit contenu à l'utilisateur, et
un moyen pour créer les données (220) lorsque l'utilisation de la liaison de communication amène au moins l'une desdites connexions logiques surveillées à changer d'état en étant engendrée ou parce qu'il y est mis fin.

16. Dispositif selon la revendication 15, dans lequel lesdites données de taxation sont engendrées à partir des données enregistrées d'après la durée pendant laquelle chaque dite au moins une connexion logique comprenant une connexion par point de communication (180, 182, 184, 186) est établie.

17. Dispositif selon la revendication 16, dans lequel le système informatique agencé pour fournir un accès à l'utilisateur agit en tant que serveur mandataire et en tant que client mandataire, et est agencé pour permettre que des informations soient transférées entre le système informatique fournissant le contenu (20) et le système informatique (20) de l'utilisateur.

18. Dispositif selon l'une quelconque des revendications 16 à 17, dans lequel au moins une connexion logique est sélectionnée parmi le groupe constitué d'une connexion par point de communication selon le protocole de commande de transmission (180, 182, 184, 186), une connexion par point de communication selon le protocole de datagramme d'utilisateur (180, 182, 184, 186) et une connexion par point de communication selon le protocole Internet (180, 182, 184, 186).

19. Dispositif selon l'une quelconque des revendications 17 à 18, dans lequel des données enregistrées comprennent en outre un enregistrement d'informations extraites d'au moins un en-tête ajouté au début d'informations qui sont transférées entre le système informatique (20) conçu pour fournir un contenu à l'utilisateur et le système informatique (10) de l'utilisateur au cours de l'existence des connexions.

20. Dispositif selon la revendication 19, dans lequel l'au moins un en-tête comprend au moins un en-tête sélectionné parmi le groupe constitué de tous les en-têtes de couches réseau de protocole de commande de transmission/protocole Internet, la totalité des en-têtes de couches transport de protocole TCP/IP et tous les en-têtes de couches application de protocole TCP/IP.

21. Dispositif selon l'une quelconque des revendications 15 à 20, dans lequel la liaison de réseau de communication comprend une liaison de réseau de communication activée en permanence.

22. Programme de serveur conçu pour mettre en oeuvre les étapes d'un procédé tel que défini dans l'une quelconque des revendications 1 à 14.

23. Procédé selon l'une quelconque des revendications 1 à 14, dans lequel ledit contenu est transmis en paquets de données.
